# EUROPEAN PATENT APPLICATION

(11) **EP 4 679 145 A1**
(43) Date of publication of application: **14.01.2026**
(21) Application number: 24766439.4
(22) Date of filing: 05.03.2024
(51) Int. Cl.: G02B 5/18, G02B 6/00, G02B 27/01

(54) **DIFFRACTION GRATING, OPTICAL WAVEGUIDE APPARATUS, AND DISPLAY DEVICE**

(30) Priority: 07.03.2023 CN 202310210150
(71) Applicant: Meta-Bounds Inc., Zhuhai, Guangdong 519000 (CN)
(72) Inventor: SHAO, Chendi, Zhuhai, Guangdong 519000 (CN); LAN, Fuyang, Zhuhai, Guangdong 519000 (CN); GUAN, Jian, Zhuhai, Guangdong 519000 (CN); XU, Song, Zhuhai, Guangdong 519000 (CN)
(74) Representative: Plougmann Vingtoft a/s
(86) International application number: PCT/CN2024/080156
(87) International publication number: WO 2024/183724

(57) **Abstract**

Provided are a diffraction grating (10) and an optical waveguide apparatus and a display device including the diffraction grating (10). The diffraction grating (10) includes a substrate (1) and microstructure units (2). The microstructure units (2) are formed on the substrate (1) and arranged at intervals in two dimensional directions. A pattern formed by the orthographic projection of a microstructure unit (2) on the substrate (1) includes a first closed pattern (21). The boundary of the first closed pattern (21) is formed by a smooth closed curve such that the boundary has no sharp vertices. At least a first curve segment having a negative radius of curvature (211) is present on the boundary such that at least one valley is formed on the boundary. In this solution, the freedom of the microstructure design is increased, and the out-coupled energy can be more uniform, which helps to reduce scattering and thus improves the image contrast.

## Description

### TECHNICAL FIELD

This application relates to the field of optical display technology, specifically a diffraction grating, an optical waveguide apparatus, and a display device.

### BACKGROUND

In the fields of augmented reality (AR) and mixed reality (MR), compared with display schemes such as bird bath (BB, semi-reflective and semi-transmissive type), bug-eye (off-axis reflective type), and freeform prism, optical waveguide schemes offer a thinner and lighter design with a larger eye-box and thus have broader application prospects.

In optical waveguide schemes, compared with an arrayed optical waveguide that uses partially reflective and transmissive films, a diffractive optical waveguide has a lower production complexity and does not exhibit grid-like dark stripes when achieving two-dimensional pupil expansion, thus attracting more attention. Currently, diffractive optical waveguides mainly involve optical waveguide schemes based on one-dimensional gratings and optical waveguide schemes based on two-dimensional gratings. Compared with optical waveguide schemes based solely on one-dimensional gratings, optical waveguide schemes based on two-dimensional gratings can achieve two-dimensional pupil expansion without requiring a transition region, thereby providing a larger eye-box and offering greater advantages. In existing optical waveguides based on two-dimensional gratings, a two-dimensional diffraction grating is typically formed by multiple microstructure units arranged at intervals in two dimensional directions. Each microstructure unit is a columnar structure whose cross-section is in a regular shape, such as a circle, ellipse, triangle, or parallelogram.

During the research and development process, the inventors have found that the preceding two-dimensional diffraction grating has at least the following problems: (1) The shape of the microstructure unit has relatively few adjustable parameters, resulting in low design flexibility. (2) When the microstructure unit is circular or elliptical, it is relatively difficult to achieve energy out-coupling. (3) When the microstructure unit is in the shape of a triangle or parallelogram having a boundary formed by straight edges, this helps to distribute energy across multiple diffraction orders and thus enables more uniform distribution of energy of light from various fields of view, but poses production challenges. In particular, the straight edges and sharp corners of the boundaries of these shapes tend to cause scattering and reduce the image contrast.

### SUMMARY

In view of these problems, this application provides a diffraction grating, an optical waveguide apparatus, and a display device to increase the freedom of the microstructure design, make out-coupled energy more uniform, reduce scattering, and improve the image contrast.

To achieve this object, this application uses the following solutions:
A diffraction grating includes a substrate and multiple microstructure units. The microstructure units are formed on the substrate and periodically arranged at intervals in two dimensional directions. A pattern formed by the orthographic projection of a microstructure unit on the substrate includes a first closed pattern. The boundary of the first closed pattern is formed by a smooth closed curve such that the boundary has no sharp vertices. At least a first curve segment having a negative radius of curvature is present on the boundary such that at least one valley is formed on the boundary.

In an optional solution, the absolute value of the radius of curvature of the first curve segment is not less than 5 nm, and the depth of each valley is not less than 5 nm.

In an optional solution, at least one protrusion is formed on the boundary.

In an optional solution, the radius of curvature of a second curve segment for forming a corresponding protrusion on the boundary is not less than 5 nm, and the height of the protrusion is not less than 5 nm.

In an optional solution, the first closed pattern is an asymmetric pattern.

In an optional solution, another smooth closed curve is present in an area enclosed by the boundary to form an inner boundary of the first closed pattern, and the inner boundary has no sharp vertices.

In an optional solution, the pattern formed by the orthographic projection of the microstructure unit on the substrate also includes a second closed pattern of an arbitrary shape.

In an optional solution, the area of the second closed pattern is not larger than the area of the first closed pattern.

In an optional solution, the shape of the boundary of the second closed pattern is similar to the shape of the boundary of the first closed pattern, and the second closed pattern is formed by at least one of translation, mirroring, rotation, or scaling of the first closed pattern.

In an optional solution, an arrangement period of the microstructure units in a first dimensional direction ranges from 150 nm to 2 µm, and an arrangement period of the microstructure units in a second dimensional direction ranges from 150 nm to 2 µm.

In an optional solution, the intervals at which the microstructure units are arranged in the first dimensional direction are not equal to the intervals at which the microstructure units are arranged in the second dimensional direction.

In an optional solution, in the two dimensional directions in which the microstructure units are arranged at intervals, the smaller internal angle of the smallest parallelogram formed by two arrangement periods as two sets of shortest opposite sides ranges from 40° to 90°.

In an optional solution, the diffraction grating is a surface relief grating or a volume holographic grating, and the thickness of the diffraction grating ranges from 10 nm to 2 µm.

In an optional solution, the diffraction grating includes at least two optical material components having different optical properties that include at least one of a refractive index, an absorption property, or a birefringence property.

In an optional solution, for the surface relief grating, a region of the microstructure units is formed at half the thickness of the grating, where the region of the microstructure units in the diffraction grating is configured as a high refractive index portion, and a region surrounding the region of the microstructure units is configured as a low refractive index portion; or the region of the microstructure units in the diffraction grating is configured as a low refractive index portion, and a region surrounding the region of the microstructure units is configured as a high refractive index portion; and for the refractive-index-gradient volume holographic grating, a region of the microstructure units corresponds to half the thickness of the grating, and the region of the microstructure units is a portion surrounded by the contour corresponding to the average refractive index of the at least two optical material components.

This application also provides an optical waveguide apparatus. The optical waveguide apparatus includes a substrate and at least one of an in-coupling grating, an out-coupling grating, or an intermediate grating disposed on the substrate.

A partial region of at least one of the in-coupling grating, the out-coupling grating, or the intermediate grating uses the preceding diffraction grating.

In an optional solution, one or more coating layers are present on at least one of an eye-facing side or an eye-away side of the diffraction grating, and one or more coating layers are present on the side of the substrate without grating.

In an optional solution, the substrate is a multilayer structure, and the diffraction grating is a multilayer structure.

Further, this application also provides a display device. The display device includes the preceding optical waveguide apparatus.

In the diffraction grating, the optical waveguide apparatus, and the display device according to embodiments of this application, the boundary of the microstructure unit in the two-dimensional diffraction grating is formed by a smooth closed curve, the boundary has no straight edges and sharp vertices, and at least a first curve segment having a negative radius of curvature is present on the boundary such that at least one valley is formed on the boundary, thereby achieving the following beneficial effects: (1) The microstructure unit of the preceding shape and structure has many adjustable parameters and rich design freedom, facilitating the adjustment of the out-coupling efficiency. (2) The microstructure unit of the preceding shape and structure enables in-coupled light from various fields of view to be uniformly distributed at different positions of the out-coupling grating, resulting in more uniform energy and color in an out-coupled image. (3) The microstructure unit of the preceding shape and structure has no straight edges and sharp vertices, thereby reducing scattering and improving the image contrast.

### BRIEF DESCRIPTION OF DRAWINGS

FIG. 1 is a diagram of a lattice of a diffraction grating according to one or more embodiments.
FIGS. 2A to 2E are each a diagram of the shape of a microstructure unit in solutions according to one or more embodiments.
FIG. 3 illustrates the curvature of a first closed pattern according to one or more embodiments.
FIG. 4 illustrates the valley of a first closed pattern according to one or more embodiments.
FIGS. 5A to 5D are each a diagram of the shape of a microstructure unit according to one or more embodiments.
FIGS. 6A to 6E are each a top view of a diffraction grating in solutions according to one or more embodiments.
FIGS. 7A to 7F are each a section view of a diffraction grating in solutions according to one or more embodiments.
FIGS. 8A to 8D are top views and diffraction effect test result diagrams of diffraction gratings in two examples according to one or more embodiments.
FIG. 9 is a top view of a diffraction grating used in comparative example one according to one or more embodiments.
FIG. 10 illustrates the test result of a diffraction effect in comparative example one according to one or more embodiments.
FIG. 11 is a top view of a diffraction grating used in comparative example two according to one or more embodiments.
FIG. 12 illustrates the test result of a diffraction effect in comparative example two according to one or more embodiments.

### DETAILED DESCRIPTION

To make the objectives, technical solutions, and advantages of this application clearer, embodiments of this application are described in detail below with reference to drawings. Examples of these preferred embodiments are illustrated in the drawings. The embodiments shown in and described with reference to the drawings are illustrative and do not limit this application.

Unless otherwise defined, all technical and scientific terms used herein have the same meanings as commonly understood by those skilled in the art to which this application pertains. The terminology used in the description of this application is intended to describe the embodiments and is not intended to limit this application.

It is to be noted that when one component is described as being "disposed on" the other component, the component may be directly on the other component or indirectly on the other component.

It is also to be noted that in the drawings of embodiments of this application, identical or similar reference numerals correspond to identical or similar components. In the description of this application, it is to be understood that if terms such as "upper", "lower", "left", and "right" indicating positional or orientation relationships are based on the positional or orientation relationships shown in the drawings, this is for convenience in describing this application and simplifying the description and is not intended to indicate or imply that the referenced device or component must have a specific orientation or must be constructed and operated in a particular orientation. Therefore, the terminology used to describe positional relationships in the drawings is for illustrative purposes only and should not be construed as limiting this patent. Those skilled in the art can interpret the meanings of these terms according to the particular circumstances.

Furthermore, it is to be noted that to avoid obscuring this application due to unnecessary details, only structures and/or process steps closely related to the technical solutions of this application are shown in the drawings, while other details not closely related to this application are omitted.

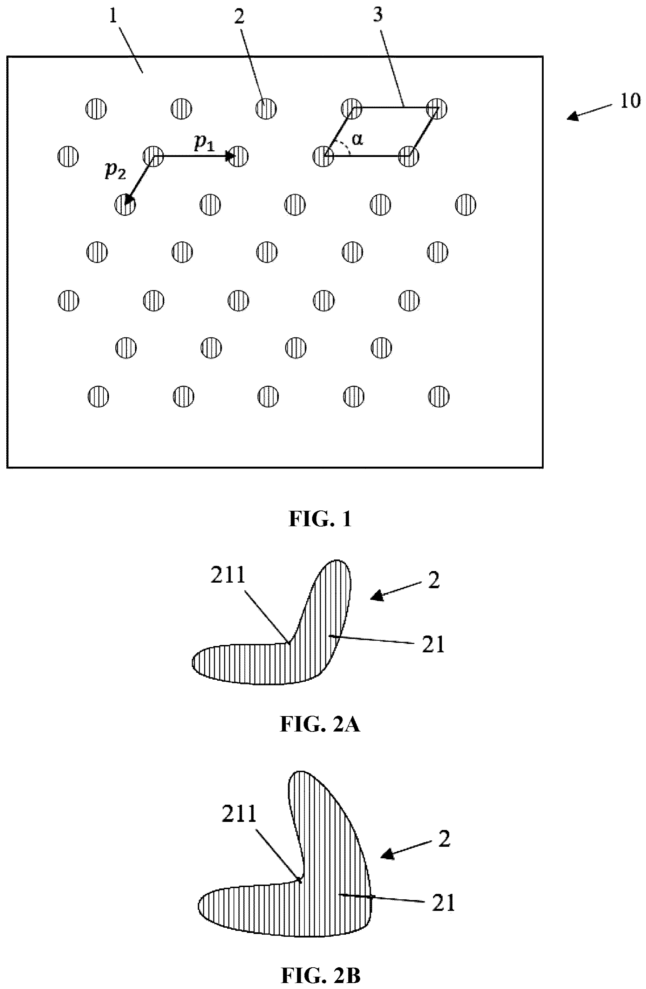

An embodiment of this application first provides a diffraction grating. As shown in FIG. 1, the diffraction grating 10 includes a substrate 1 and multiple microstructure units 2 formed on the substrate 1 and periodically arranged at intervals in two dimensional directions. The arrangement period of the microstructure units 2 in a first dimensional direction *p*₁ is |*p*₁|. The arrangement period of the microstructure units 2 in a second dimensional direction *p*₂ is |*p*₂|. It is to be noted that in FIG. 1, the circular dots representing the microstructure units 2 illustrate the array structure of the microstructure units 2 on the substrate 1 and do not indicate that the microstructure units 2 are circular.

In one or more embodiments, referring to FIG. 1, in the two dimensional directions in which the microstructure units 2 are arranged at intervals, the smaller internal angle α of the smallest parallelogram 3 formed by two arrangement periods as two sets of shortest opposite sides ranges from 40° to 90°. The parallelogram 3 is a repeating unit having the smallest area and the smallest side length and thus is defined as a grating unit. The smaller internal angle in the repeating grating unit is 40° to 90°.

In one or more embodiments, referring to FIG. 1, the arrangement period |*p*₁| of the microstructure units 2 in the first dimensional direction *p*₁ may be set to 150 nm to 2 µm, and the arrangement period |*p*₂| of the microstructure units 2 in the second dimensional direction *p*₂ may be set to 150 nm to 2 µm. In a more preferred solution, the arrangement period |*p*₁| of the microstructure units 2 in the first dimensional direction *p*₁ is not equal to the arrangement period |*p*₂| of the microstructure units 2 in the second dimensional direction *p*₂, that is, |*p*₁| # |*p*₂|.

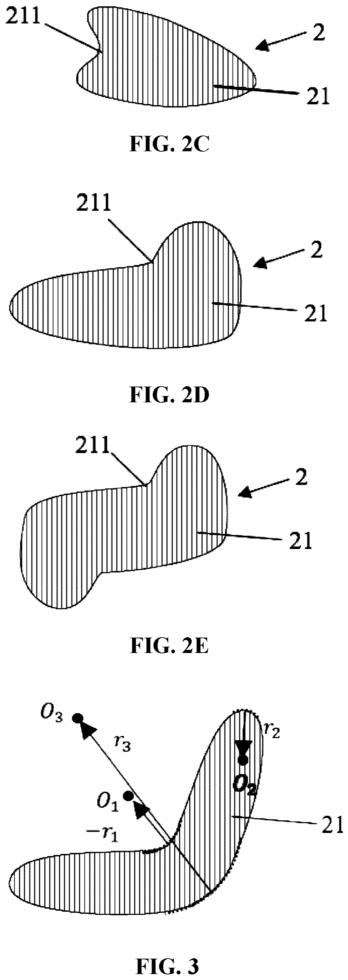

FIGS. 2A to 2E are each a diagram of the shape of a microstructure unit 2 in solutions of this application. As shown in FIGS. 2A to 2E, a pattern formed by the orthographic projection of a microstructure unit 2 on the substrate 1 includes a first closed pattern 21. The boundary of the first closed pattern 21 is formed by a smooth closed curve such that the boundary has no sharp vertices. At least a first curve segment having a negative radius of curvature is present on the boundary such that at least one valley 211 is formed on the boundary.

It is to be noted that when a non-conductive microstructure is observed, to improve the accuracy, nano-scale metal particles may be sprayed on the microstructure. In this case, when observed under high magnification, the microstructure may exhibit a particle-like boundary, with the particle diameter typically ranging from 5 nm to 150 nm. In this application, when the boundary is determined, at least one microstructure unit is present in the field of view at the time of observation. If the radius of curvature of a curve segment at the time of observation is less than 5 nm, it is determined that the curve segment has a sharp vertex.

The radius of curvature of the curve constituting the first closed pattern 21 is described as follows:
Referring to FIG. 3, at any segment of the curve, an arc is fitted, and a straight arrow is drawn starting from the tangent point and pointing to the center of the arc: When the straight arrow points to the inside of the first closed pattern 21, the curvature is defined as a positive value, such as *r*₂ pointing to the center *O*₂ of the circle in FIG. 3. Even if the radius of curvature is large and the center of the circle is outside the first closed pattern 21 (the straight arrow passes through the inside of the first closed pattern 21 and then points to the outside), the curvature is also positive, such as *r*₃ pointing to the center *O*₃ of the circle in FIG. 3. When the arrow points to the outside of the first closed pattern 21, the curvature is defined as a negative value, such as *r*₁ pointing to the center *O*₁ of the circle in FIG. 3.

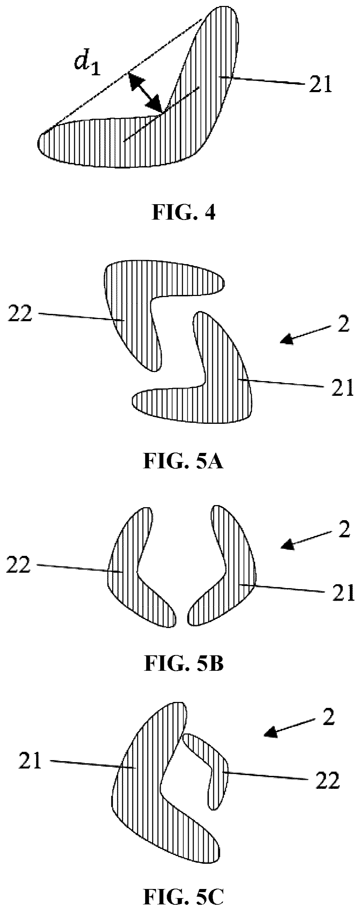

In one or more embodiments, referring to FIG. 4, in the first closed pattern 21, the absolute value of the radius of curvature of the first curve segment forming the valley 211 is not less than 5 nm (more preferably ranges from 5 nm to 1 µm), and the depth *d*₁ of the valley 211 is not less than 5 nm. It is to be noted that when the magnification is very low, that is, when the field of view is in a large range, for example, 100 microstructure units are in the field of view, the vicinity of the 5 nm valley is approximately straight; and when the magnification is very high, for example, only one microstructure unit is visible in the field of view, the valley can be seen.

Based on the preceding diffraction grating 10, the orthographic projection of the microstructure unit 2 on the substrate 1 forms the first closed pattern 21. The boundary of the first closed pattern has no sharp vertices and has the valley 211. Thus a concave edge is present on the boundary of the microstructure unit 2. Compared with a flat edge or a convex edge, the concave edge can effectively improve the uniformity of pupil expansion in different directions, thereby improving the uniformity of the image viewed by the human eye.

In some other embodiments, the boundary of the first closed pattern 21 has not only the preceding mentioned valley 211 but also at least one protrusion. In a preferred solution, the radius of curvature of a second curve segment for forming the protrusion on the boundary is not less than 5 nm (more preferably, in a range from 5 nm to 1 µm), and the height of the protrusion is not less than 5 nm. Thus, as a supplement to the valley, the protrusion enables an increased freedom degree of design and increased uniformity of pupil expansion in different directions.

In some other embodiments, another smooth closed curve is present in the area enclosed by the boundary of the first closed pattern 21 to form the inner boundary of the first closed pattern 21, and the inner boundary has no sharp vertices. This can be understood as that the first closed pattern has a hollowed-out area that preferably has a maximum diameter of not less than 5 nm.

In a more preferred solution, the first closed pattern 21 is an asymmetric pattern, such as the pattern of FIG. 2D.

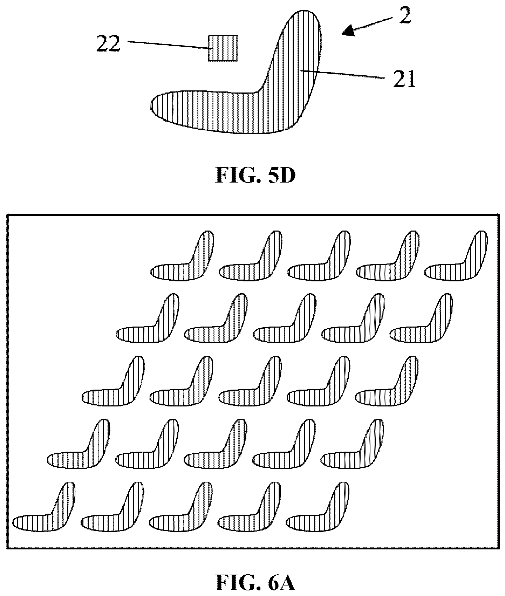

FIGS. 5A to 5D are each a diagram of the shape of a microstructure unit 2 in solutions according to some other embodiments. In some other embodiments, the pattern formed by the orthographic projection of the microstructure unit 2 on the substrate 1 includes not only the preceding mentioned first closed pattern 21 but also a second closed pattern 22. The second closed pattern 22 may be in an arbitrary shape. The second closed pattern 22 may be enclosed by one or more straight line segments and/or one or more curved segments. For example, the second closed pattern 22 may be in the shape of a circle, an ellipse, a sector, a ring, or a polygon. As shown in FIG. 5D, the second closed pattern 22 is in the shape of a rectangle.

In a preferred solution, the shape of the boundary of the second closed pattern 22 is similar to the shape of the boundary of the first closed pattern 21, and the second closed pattern 22 is formed by at least one of translation, mirroring, rotation, or scaling of the first closed pattern 21. As shown in FIGS. 5A to 5C, the second closed pattern 22 also has no sharp vertices.

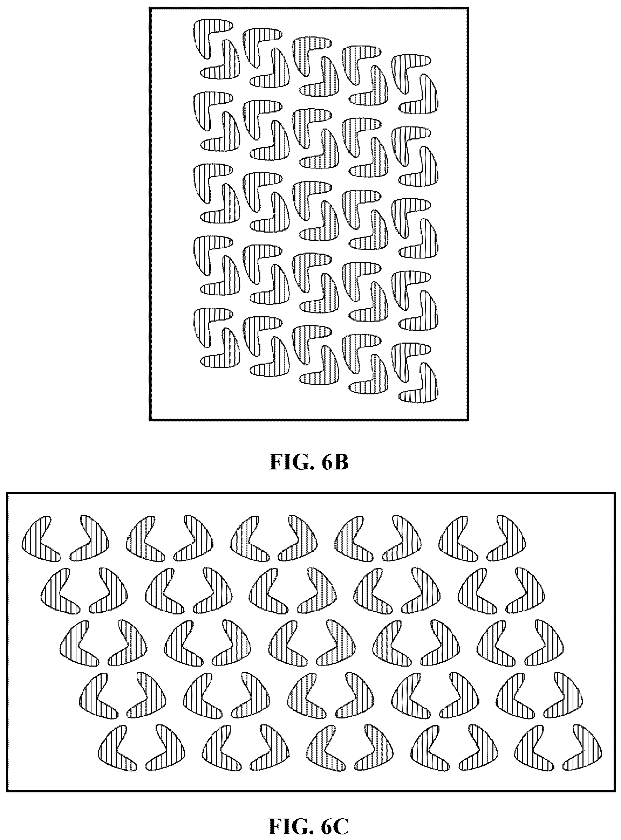

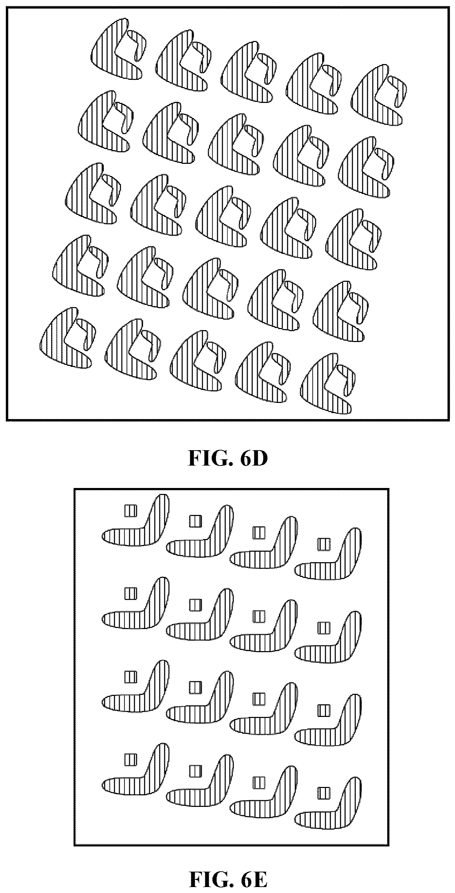

FIGS. 6A to 6E are each a top view of a diffraction grating in embodiments of this application. FIG. 6A illustrates the structure of a diffraction grating corresponding to the microstructure unit of FIG. 2A. FIG. 6B illustrates the structure of a diffraction grating corresponding to the microstructure unit of FIG. 5A. FIG. 6C illustrates the structure of a diffraction grating corresponding to the microstructure unit of FIG. 5B. FIG. 6D illustrates the structure of a diffraction grating corresponding to the microstructure unit of FIG. 5C. FIG. 6E illustrates the structure of a diffraction grating corresponding to the microstructure unit of FIG. 5D. As shown in FIGS. 6A to 6E, the microstructure units 2 are arranged at intervals along the two dimensional directions and are not connected to each other in the two-dimensional array.

In the diffraction grating according to this embodiment of this application, the boundary of the microstructure unit in the two-dimensional diffraction grating is formed by a smooth closed curve, the boundary has no straight edges and sharp vertices, and at least one valley is formed on the boundary, thereby achieving the following beneficial effects: The microstructure unit of the preceding shape and structure has many adjustable parameters and rich design freedom, facilitating the adjustment of the out-coupling efficiency. The microstructure unit of the preceding shape and structure enables in-coupled light from various fields of view to be uniformly distributed at different positions of the out-coupling grating, resulting in more uniform energy and color in an out-coupled image. Moreover, the microstructure unit of the preceding shape and structure has no straight edges and sharp vertices, thereby reducing scattering and improving the image contrast.

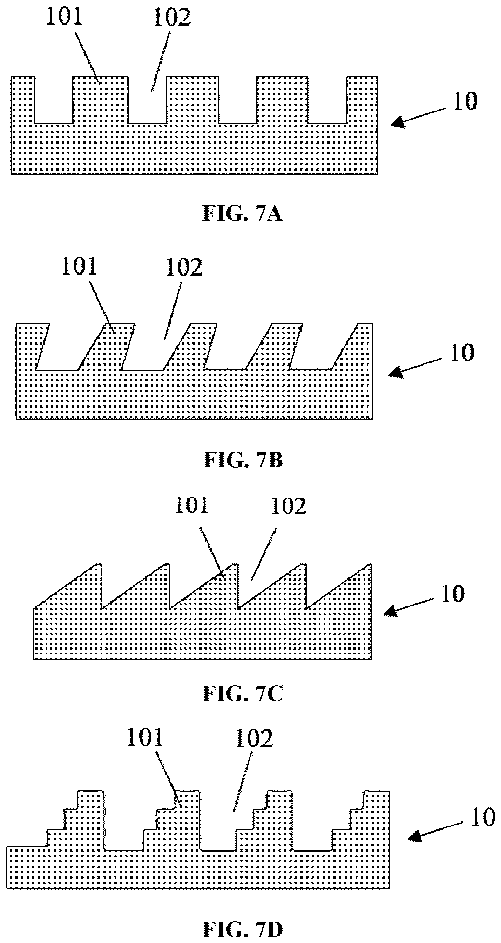

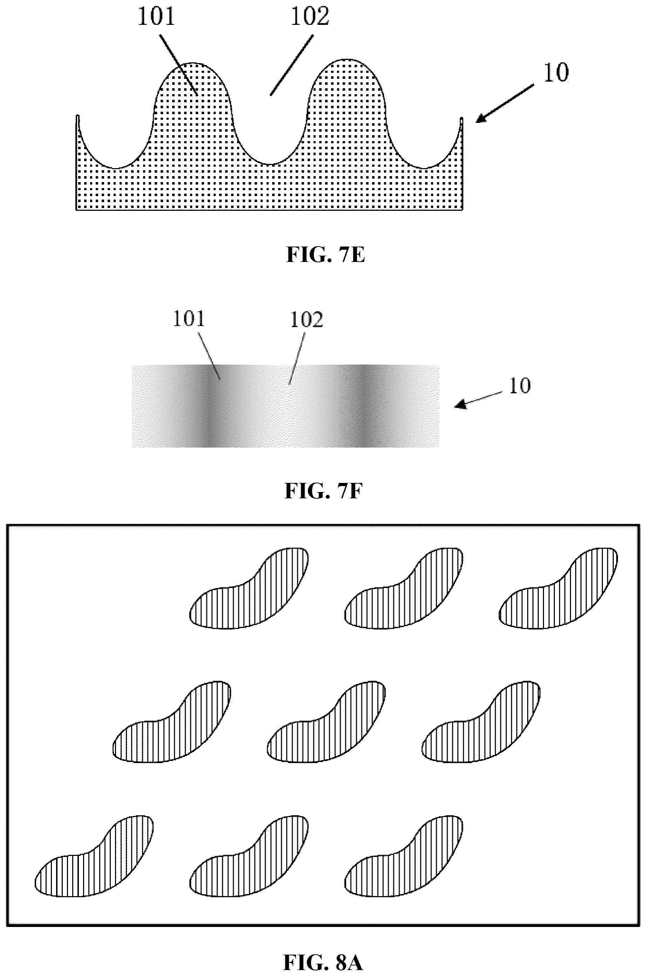

In this embodiment of this application, the diffraction grating 10 may be implemented in the form of a surface relief grating or a volume holographic grating. Specifically, the thickness of the grating is between 10 nm and 2 µm. FIGS. 7A to 7F are each a section view of a diffraction grating in solutions according to some embodiments. FIG. 7A is a diagram illustrating the structure of a surface relief grating with a straight-groove envelope. FIG. 7B is a diagram illustrating the structure of a surface relief grating with an oblique-tooth envelope. FIG. 7C is a diagram illustrating the structure of a surface relief grating with a blazed envelope. FIG. 7D is a diagram illustrating the structure of a surface relief grating with a stepped envelope. FIG. 7E is a diagram illustrating the structure of a surface relief grating with a curved-surface envelope. FIG. 7F is a diagram illustrating the structure of a volume holographic grating.

In this embodiment of this application, the diffraction grating 10 includes at least two optical material components having different optical properties, and the optical properties include at least one of a refractive index, an absorption property, or a birefringence property. Therefore, if the grating is in air, the air is also considered as an optical material. For a material without birefringence, the optical properties of the material can be described comprehensively in terms of the refractive index and the absorption property. When the two optical materials differ mainly in the refractive index, the grating can be divided into a high refractive index portion and a low refractive index portion. Referring to FIGS. 7A to 7F, the diffraction grating 10 includes a high refractive index portion 101 and a low refractive index portion 102. It is to be noted that this illustration can also be used to distinguish between two optical materials having different absorption properties and/or different birefringence properties.

For the surface relief grating, the region of the microstructure units 2 is preferably formed at half the thickness of the grating. In some embodiments, the region of the microstructure units 2 in the diffraction grating 10 is configured as a high refractive index portion 101, and a region surrounding the region of the microstructure units 2 is configured as a low refractive index portion 102. The refractive index of the high refractive index portion 101 is between 1.5 and 3.0. The refractive index of the low refractive index portion 102 is between 1.0 and 1.5. In some other embodiments, the region of the microstructure units 2 in the diffraction grating 10 is configured as a low refractive index portion 102, and a region surrounding the region of the microstructure units 2 is configured as a high refractive index portion 101. It can be understood that in the structure of each diffraction grating 10 as shown in FIGS. 6A to 6E, the dark region may be configured as a high refractive index portion, or the light region may be configured as a high refractive index portion.

For the refractive-index-gradient volume holographic grating, the region of the microstructure units 2 preferably corresponds to the position with half the thickness of the grating. With the contour corresponding to the average refractive index of the optical material as the dividing line, the portion where the refractive index is larger than the average refractive index is defined as a high refractive index portion, and the portion where the refractive index is smaller than the average refractive index is defined as a low refractive index portion. The region of the microstructure units 2 is a portion enclosed by the contour corresponding to the average refractive index of the optical material and thus may be configured as a high refractive index portion or a low refractive index portion.

Based on the diffraction grating of the previous embodiment, an embodiment of this application provides an optical waveguide apparatus. The optical waveguide apparatus includes a substrate, and an in-coupling grating and an out-coupling grating disposed on the substrate. The in-coupling grating is configured to couple external light beams into the substrate. The out-coupling grating is configured to couple light beams out of the substrate. In a further embodiment, the optical waveguide apparatus may also include an intermediate grating. The partial or complete region of the in-coupling grating and/or the out-coupling grating and/or the intermediate grating uses the diffraction grating of this embodiment of this application. It is to be noted that when the diffraction grating of this embodiment of this application is applied to the optical waveguide apparatus, the substrate of the optical waveguide apparatus may be directly reused as the substrate of the diffraction grating, that is, the substrate of the optical waveguide apparatus and the substrate of the diffraction grating are the same one.

In an optional embodiment, in the optical waveguide apparatus, one or more coating layers are present on at least one of the eye-facing side or the eye-away side of the diffraction grating, and/or one or more coating layers are present on the side of the substrate without grating. Further, the substrate may be a multilayer structure, and the diffraction grating may be a multilayer structure.

Further, this application also provides a display device, for example, an AR display device or an MR display device. The display device includes an image projection apparatus and the optical waveguide apparatus of the previous embodiment. The image projection apparatus is configured to generate image light (light carrying image information). The image light is coupled into the substrate by the in-coupling grating, transmitted to the out-coupling grating by the substrate, and coupled out of the substrate by the out-coupling grating, and then transmitted to the human eye so that the human eye can observe the corresponding image information.

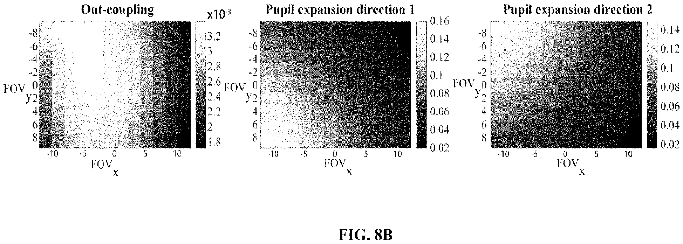

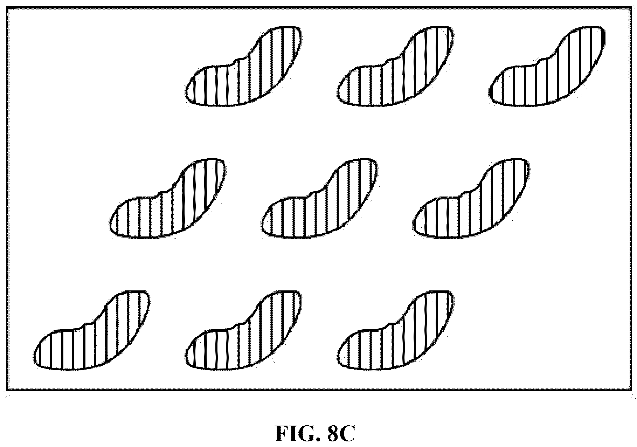

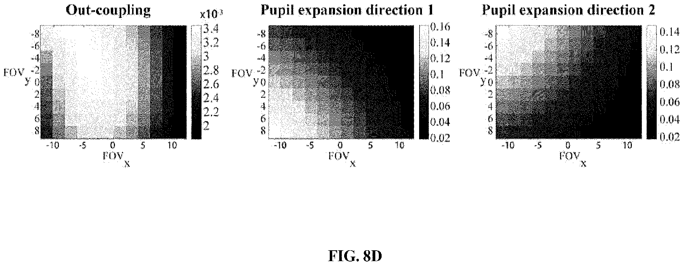

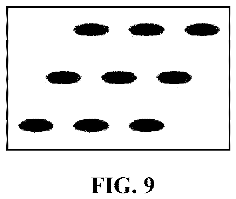

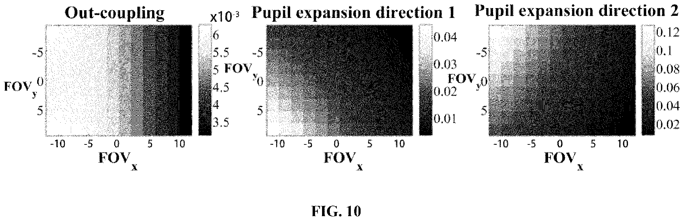

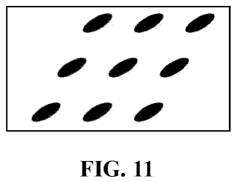

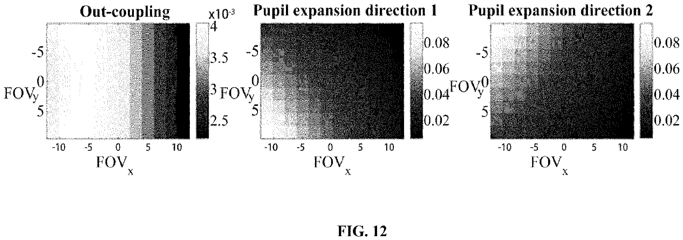

In examples of this application, the following comparative tests are conducted:
(1) Example one: In the optical waveguide apparatus of the embodiment of this application, the out-coupling grating adopts the diffraction grating of the embodiments of this application, specifically, the diffraction grating of FIG. 8A. The diffraction effect of the out-coupling grating is tested. The test results are shown in FIG. 8B.
(2) Example two: In the optical waveguide apparatus of the embodiment of this application, the out-coupling grating adopts the diffraction grating of the embodiments of this application, specifically, the diffraction grating of FIG. 8C. (In FIG. 8C, the microstructure unit includes a protrusion in addition to the original valley compared with the microstructure unit of FIG. 8A.) The diffraction effect of the out-coupling grating is tested. The test results are shown in FIG. 8D.
(3) Comparative example one: Referring to the existing art, the out-coupling grating in the optical waveguide apparatus of step (1) uses the diffraction grating of FIG. 9. Here, the boundary of the microstructure unit is elliptical. The diffraction effect of the out-coupling grating of comparative example one is tested. The test results are shown in FIG. 10.
(4) Comparative example two: Referring to the existing art, the out-coupling grating in the optical waveguide apparatus of step (1) uses the diffraction grating of FIG. 11. Here, the boundary of the microstructure unit is also elliptical, and the rotation angle is different from that of step (3). The diffraction effect of the out-coupling grating of comparative example two is tested. The test results are shown in FIG. 12.

It is to be noted that FIGS. 8A, 8C, 9, and 11 illustrate only nine microstructures, while in actual testing, a large-area array of microstructures is used.

For the optical waveguide using the two-dimensional diffraction grating, when the pupil expansion efficiency is low and the out-coupling efficiency is high, non-uniform brightness caused by a central bright stripe is prone to occur. Therefore, the pupil expansion efficiency and the out-coupling efficiency can be used in the evaluation of the advantages and disadvantages of the two-dimensional diffraction grating. The two-dimensional grating that can be used for optical waveguide should have the highest pupil expansion efficiency as possible, and at the same time, the out-coupling efficiency is not too high. Based on the preceding test results, the diffraction grating of FIG. 9 has the diffraction effect of FIG. 10: In pupil expansion direction 1, the diffraction efficiency is low, and the out-coupling efficiency is high, so there will be a central bright stripe. The diffraction grating of FIG. 11 has the diffraction effect of FIG. 12: Although the out-coupling efficiency is partially reduced, the diffraction efficiency in the two pupil expansion directions is low, so there will still be a central bright stripe. The diffraction gratings of FIGS. 8A and 8C of this embodiment of this application have the diffraction effects of FIGS. 8B and 8D: Compared with FIGS. 10 and 12, the out-coupling efficiencies of FIGS. 8B and 8D are lower, and the diffraction efficiencies in the pupil expansion direction are higher, effectively avoiding the central bright stripe, improving the viewing uniformity of the human eye, and enabling a higher image contrast. Compared with the microstructure of FIG. 8A, the microstructure of FIG. 8C has a protrusion added to the original valley to divide the valley into two valleys. According to the comparison between the effect of FIG. 8B and the effect of FIG. 8D, the added protrusion makes both the out-coupling efficiency and the diffraction efficiency in the two pupil expansion directions increase by about 2%, thereby maintaining a low out-coupling efficiency and a high pupil expansion efficiency, and thus improving the diffraction effect by optimizing the combination of valleys and protrusions.

In the diffraction grating, the optical waveguide apparatus, and the display device according to the preceding embodiments of this application, the boundary of the microstructure unit in the two-dimensional diffraction grating is formed by a smooth closed curve, the boundary has no straight edges and sharp vertices, and at least a first curve segment having a negative radius of curvature is present on the boundary such that at least one valley is formed on the boundary, thereby increasing the freedom of the microstructure design, making coupled-out energy more uniform, reducing scattering, and improving the image contrast.

Although this application has been illustrated and described with reference to embodiments, it is to be understood by those skilled in the art that various changes in form and detail may be made without departing from the spirit and scope of this application as defined by the claims and their equivalents.

## Claims

1. A diffraction grating, comprising:
a substrate; and
a plurality of microstructure units formed on the substrate and arranged periodically at intervals in two dimensional directions, wherein among the plurality of microstructure units, a pattern formed by an orthographic projection of a microstructure unit on the substrate comprises a first closed pattern, wherein
a boundary of the first closed pattern is formed by a smooth closed curve such that the boundary has no sharp vertices, wherein at least a first curve segment having a negative radius of curvature is present on the boundary to form at least one valley on the boundary.

2. The diffraction grating of claim 1, wherein an absolute value of the radius of curvature of the first curve segment is not less than 5 nm, and a depth of each of the at least one valley is not less than 5 nm.

3. The diffraction grating of claim 1, wherein at least one protrusion is formed on the boundary.

4. The diffraction grating of claim 3, wherein among the at least one protrusion, a radius of curvature of a second curve segment for forming a corresponding protrusion on the boundary is not less than 5 nm, and a height of the protrusion is not less than 5 nm.

5. The diffraction grating of claim 1, wherein the first closed pattern is an asymmetric pattern.

6. The diffraction grating of claim 1, wherein another smooth closed curve is present in an area enclosed by the boundary to form an inner boundary of the first closed pattern, and the inner boundary has no sharp vertices.

7. The diffraction grating of any one of claims 1 to 6, wherein the pattern formed by the orthographic projection of the microstructure unit on the substrate further comprises a second closed pattern of an arbitrary shape.

8. The diffraction grating of claim 7, wherein an area of the second closed pattern is not larger than an area of the first closed pattern.

9. The diffraction grating of claim 8, wherein a shape of a boundary of the second closed pattern is similar to a shape of the boundary of the first closed pattern, and the second closed pattern is formed by performing at least one of translation, mirroring, rotation, or scaling on the first closed pattern.

10. The diffraction grating of claim 1, wherein an arrangement period of the plurality of microstructure units in a first dimensional direction ranges from 150 nm to 2 µm, and an arrangement period of the plurality of microstructure units in a second dimensional direction ranges from 150 nm to 2 µm.

11. The diffraction grating of claim 10, wherein the arrangement period of the plurality of microstructure units in the first dimensional direction is not equal to the arrangement period of the plurality of microstructure units in the second dimensional direction.

12. The diffraction grating of claim 1, wherein in the two dimensional directions in which the plurality of microstructure units are arranged periodically, a smaller internal angle of a smallest parallelogram formed by two arrangement periods as two sets of shortest opposite sides ranges from 40° to 90°.

13. The diffraction grating of claim 1, wherein the diffraction grating is a surface relief grating or a volume holographic grating, and a thickness of the diffraction grating ranges from 10 nm to 2 µm.

14. The diffraction grating of claim 13, wherein the diffraction grating comprises at least two optical material components having different optical properties, and the optical properties comprise at least one of a refractive index, an absorption property, or a birefringence property.

15. The diffraction grating of claim 14, wherein
for the surface relief grating, a region of the plurality of microstructure units is formed at half the thickness of the grating, wherein the region of the plurality of microstructure units in the diffraction grating is configured as a high refractive index portion, and a region surrounding the region of the plurality of microstructure units is configured as a low refractive index portion; or the region of the plurality of microstructure units in the diffraction grating is configured as a low refractive index portion, and a region surrounding the region of the plurality of microstructure units is configured as a high refractive index portion; and
for the refractive-index-gradient volume holographic grating, a region of the plurality of microstructure units corresponds to half the thickness of the grating, and the region of the plurality of microstructure units is a portion surrounded by a contour corresponding to an average refractive index of the at least two optical material components.

16. An optical waveguide apparatus, comprising:
a substrate, wherein
at least one of an in-coupling grating, an out-coupling grating, or an intermediate grating disposed on the substrate; and
a partial region of the at least one of the in-coupling grating, the out-coupling grating, or the intermediate grating uses the diffraction grating of any one of claims 1 to 15.

17. The optical waveguide apparatus of claim 16, wherein at least one coating layer is present on at least one of an eye-facing side or an eye-away side of the diffraction grating, and at least one coating layer is present on a side of the substrate without grating.

18. The optical waveguide apparatus of claim 16, wherein the substrate is a multilayer structure, and the diffraction grating is a multilayer structure.

19. A display device, comprising the optical waveguide apparatus of any one of claims 16 to 18.
